# EUROPEAN PATENT APPLICATION

(11) **EP 4 588 728 A1**
(43) Date of publication of application: **23.07.2025**
(21) Application number: 25150838.8
(22) Date of filing: 09.01.2025
(51) Int. Cl.: B60S 1/34

(54) **WIPER DEVICE**

(30) Priority: 22.01.2024 JP 2024007630
(71) Applicant: Mitsuba Corporation, Kiryu-shi, Gunma 376-8555 (JP)
(72) Inventor: NAKAJIMA, Nobutaka, Kiryu-shi, Gunma, 3768555 (JP); KOGUCHI, Yasuaki, Kiryu-shi, Gunma, 3768555 (JP); SODA, Toru, Kiryu-shi, Gunma, 3768555 (JP)
(74) Representative: Kurig, Thomas

(57) **Abstract**

An arm head (50) includes a head-side engagement part (57) with which a tension spring (70) is engaged. An arm shank (40) includes: a pair of sidewall parts (41) disposed opposed to each other in a wiping direction; a top wall part (42) provided on a side opposite to the wiping surface side of the sidewall parts (41) and connecting the sidewall parts (41); a shank-side engagement part (46) provided between the sidewall parts (41) and with which the tension spring (70) is engaged; and a spring accommodating recess (47) provided at the top wall part (42). When the arm shank (40) is raised, a part of the tension spring (70) is accommodated in the spring accommodating recess (47), and when the arm shank is raised and viewed from a direction in which the sidewall parts are opposed to each other, the tension spring is hidden by the sidewall parts.

## Description

### BACKGROUND

### Technical Field

The disclosure relates to a wiper device that includes a wiper blade wiping a wiping surface and is swung by a swing shaft.

### Related Art

Patent Document 1 describes a wiper arm including: an arm head body fixed to a drive shaft; a retainer rotatably linked to the arm head body; and a return spring disposed between the arm head body and the retainer. A spring force of the return spring acts to press a wiper blade held by the retainer against a wiping surface.

### Related Art Documents

### Patent Documents

[Patent Document 1] Japanese Patent Application Laid-Open No. 2014-101059

### SUMMARY

### Problem to Be Solved

The wiper device is subjected to traveling wind during vehicle traveling. Accordingly, the wiper device generates wind noise, especially during high-speed traveling of the vehicle. In recent years, in electric vehicles and the like, since a power source is an electric motor, noise is small, and wind noise transmitted to the vehicle interior becomes unpleasant to vehicle occupants. To suppress generation of such wind noise, it is desirable to configure a height of the wiper device from the wiping surface to be as low as possible to make it less likely to be subjected to traveling wind.

In the art described in Patent Document 1, with the retainer collapsed with respect to the arm head body, the return spring protrudes from the retainer to the wiping surface side, and a relatively large dead space is present between the return spring and the retainer on a side opposite to the wiping surface side. Thus, with the structure described in Patent Document 1, it is difficult to sufficiently suppress generation of wind noise.

An objective of the disclosure is to provide a wiper device capable of further reducing a height from a wiping surface to further suppress generation of wind noise.

### Means for Solving Problem

In an aspect of a wiper device, the wiper device includes: an arm head fixed to a swing shaft; an arm shank having a base end side rotatably mounted to the arm head; a wiper blade mounted to a tip side of the arm shank; and a spring provided between the arm head and the arm shank and pressing the wiper blade against a wiping surface. The arm head includes a first engagement part with which a base end side of the spring is engaged. The arm shank includes: a pair of sidewall parts disposed opposed to each other in a wiping direction of the wiper blade; a top wall part provided on a side opposite to a wiping surface side of the pair of sidewall parts and connecting the pair of sidewall parts to each other; a second engagement part which is provided between the pair of sidewall parts and with which a tip side of the spring is engaged; and a spring accommodating recess provided at the top wall part and capable of accommodating at least a part of the spring. With the arm shank raised with respect to the arm head, at least a part of the spring is accommodated in the spring accommodating recess, and upon viewing the arm shank from a direction in which the pair of sidewall parts are opposed to each other with the arm shank raised with respect to the arm head, the spring is hidden by the pair of sidewall parts.

### Effects

According to the disclosure, it is possible to realize a wiper device in which the spring does not significantly protrude toward the wiping surface, the height from the wiping surface can be further reduced, and thus it is possible to further suppress generation of wind noise.

### BRIEF DESCRIPTION OF THE DRAWINGS

FIG. 1 is a view of a wiper device viewed from a surface side.
FIG. 2 is a view of the wiper device viewed from a lateral side.
FIG. 3 is a view of the wiper device viewed from a back side.
FIG. 4 is a cross-sectional view along line A-A in FIG. 1.
FIG. 5 is a perspective view showing an arm shank and a wiper blade.
FIG. 6 is a perspective view showing an inner side of the arm shank.
FIG. 7 is a perspective view of an arm head viewed from the surface side.
FIG. 8 is a perspective view of the arm head viewed from the back side.
FIG. 9 is a perspective view showing a tension spring alone.
FIG. 10 is a cross-sectional view showing a lock-back state of the wiper device.
FIG. 11 is a cross-sectional view along line B-B in FIG. 10.

### DESCRIPTION OF THE EMBODIMENTS

Hereinafter, an embodiment of the disclosure will be described in detail with reference to the drawings.

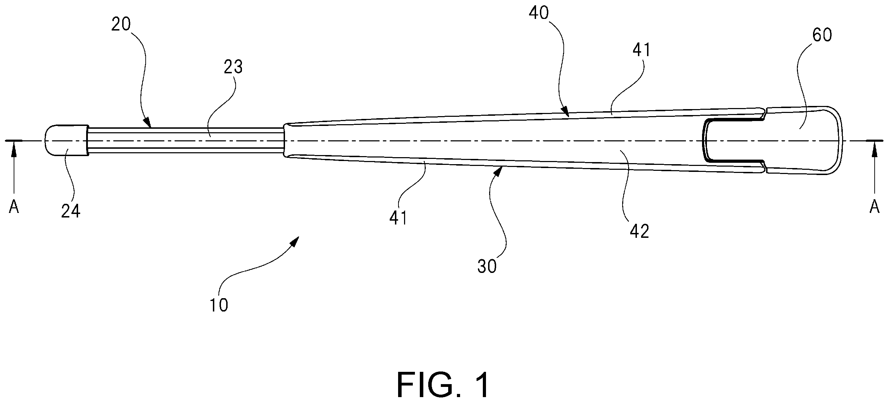

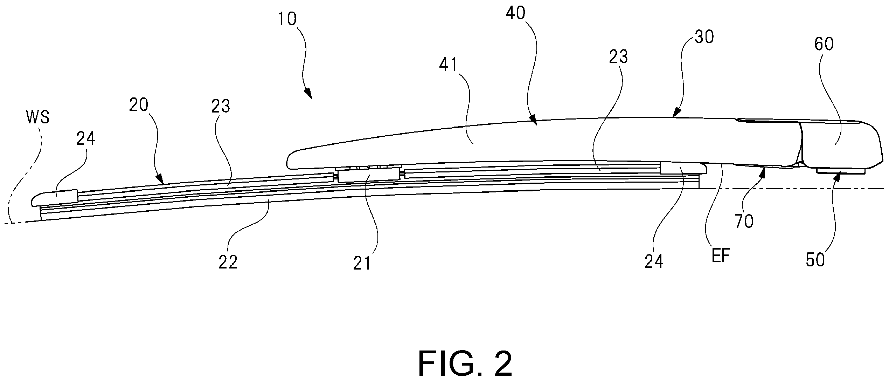

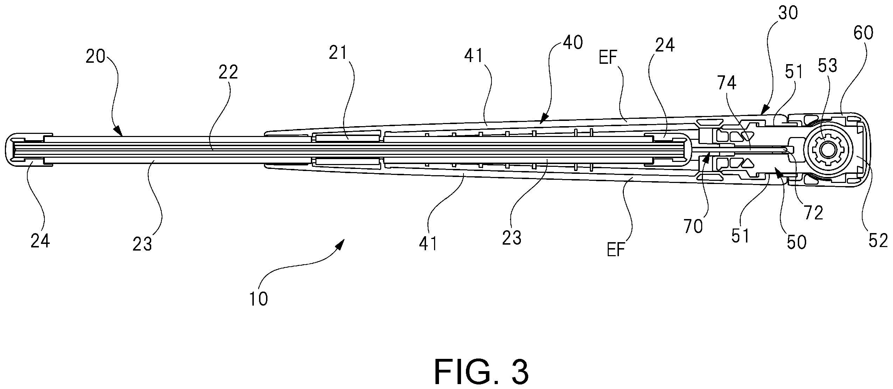

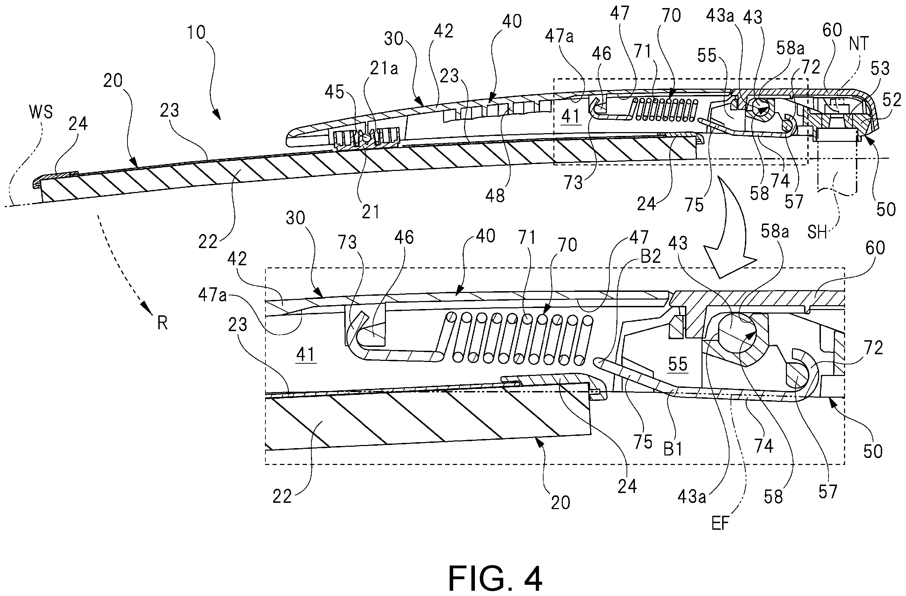

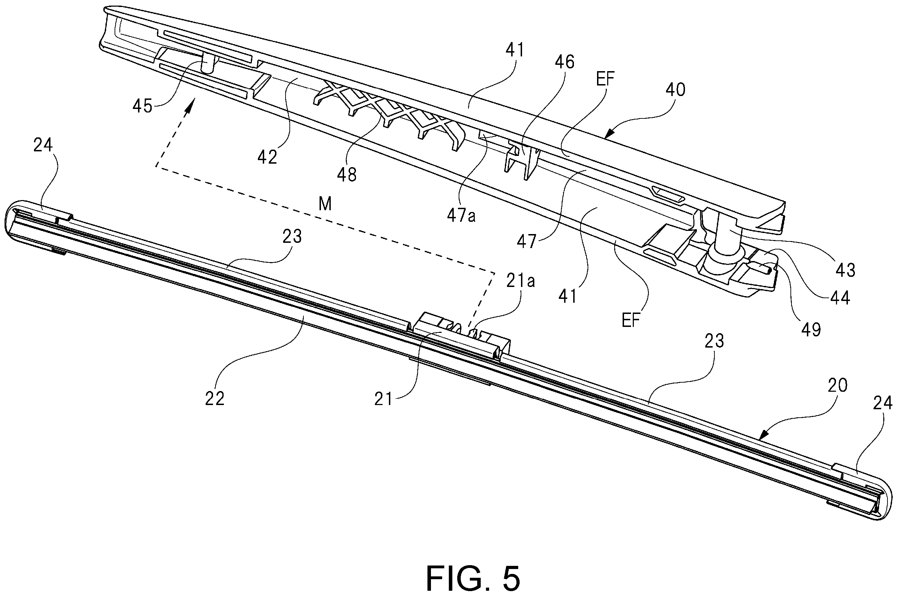

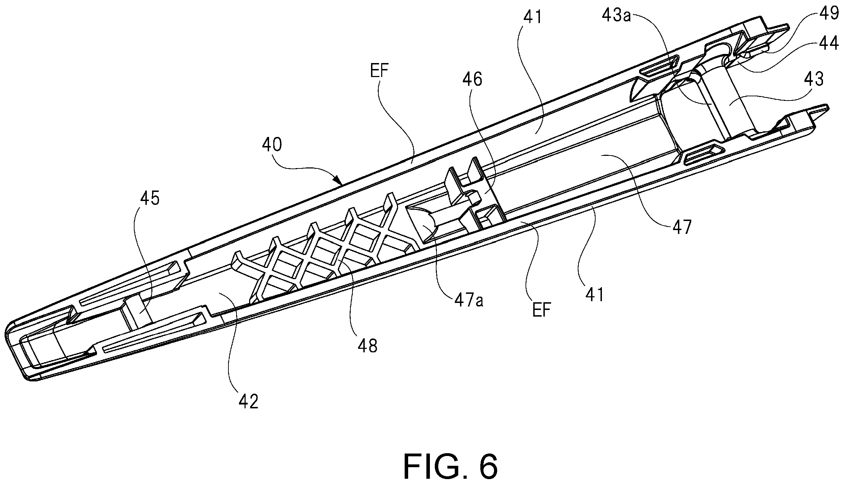

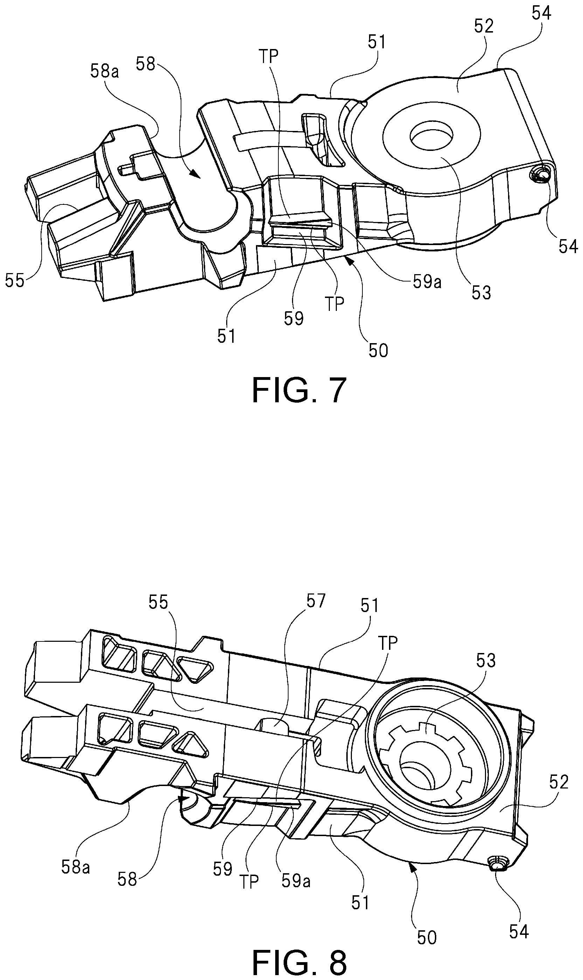

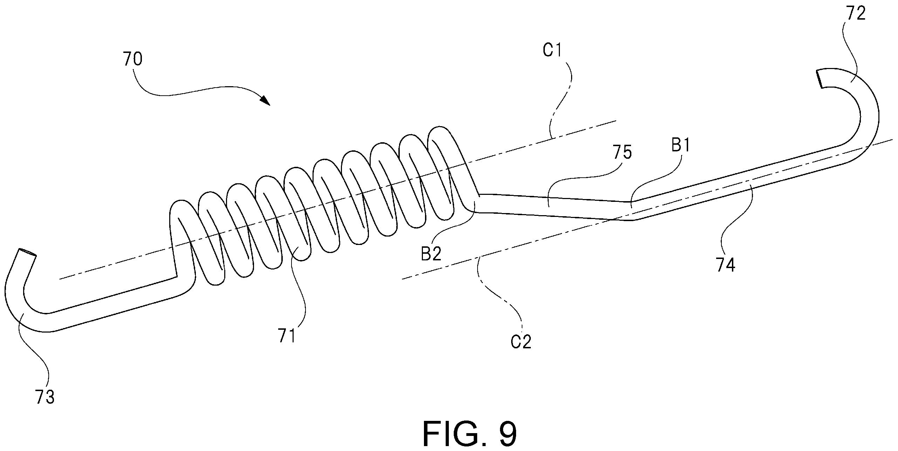

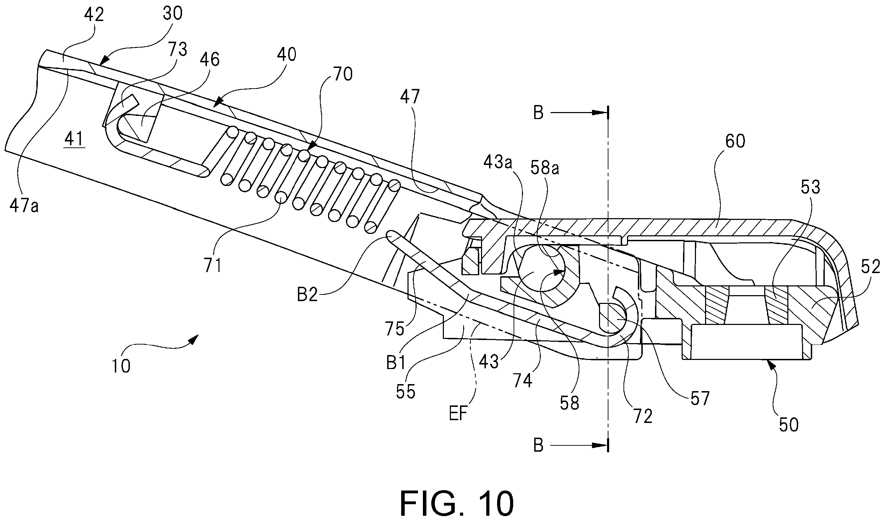

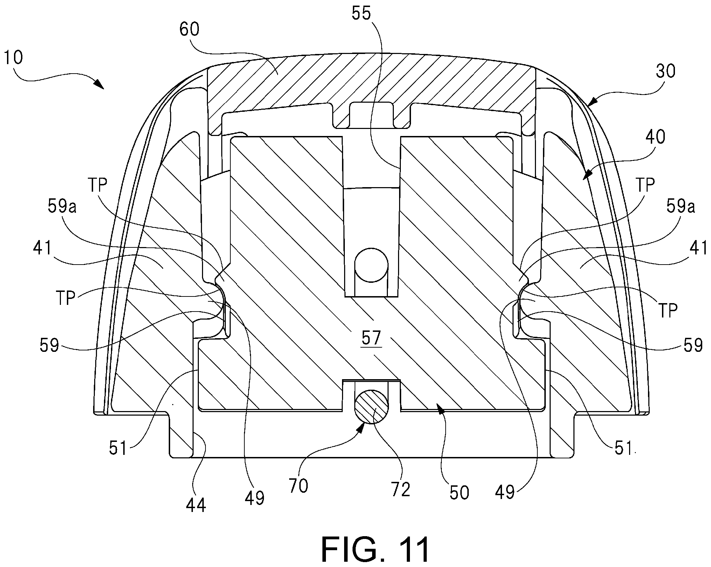

FIG. 1 shows a view of a wiper device viewed from a surface side. FIG. 2 shows a view of the wiper device viewed from a lateral side. FIG. 3 shows a view of the wiper device viewed from a back side. FIG. 4 shows a cross-sectional view along line A-A in FIG. 1. FIG. 5 shows a perspective view of an arm shank and a wiper blade. FIG. 6 shows a perspective view of an inner side of the arm shank. FIG. 7 shows a perspective view of an arm head viewed from the surface side. FIG. 8 shows a perspective view of the arm head viewed from the back side. FIG. 9 shows a perspective view of a tension spring alone. FIG. 10 shows a cross-sectional view of the wiper device in a lock-back state. FIG. 11 shows a cross-sectional view along line B-B in FIG. 10.

### [Overview of wiper device]

A wiper device 10 shown in FIG. 1 to FIG. 4 serves to wipe a windshield (wiping surface WS) provided at a back door of a vehicle such as an automobile. The wiper device 10 includes a wiper blade 20 that wipes the wiping surface WS, and a wiper arm 30 to which the wiper blade 20 is mounted.

A base end side (right side in FIG. 1 to FIG. 4) of the wiper arm 30 is fixed by a fastening nut NT (refer to FIG. 4) to a tip side of a swing shaft SH (refer to FIG. 4) of a rear wiper motor accommodated inside the back door. Accordingly, the swing shaft SH swings by driving of the rear wiper motor, and thus the wiper arm 30 and the wiper blade 20 swing on the wiping surface WS.

The wiper blade 20 is mounted to a tip side (left side in FIG. 1 to FIG. 4) of the wiper arm 30. The wiper blade 20 includes a linkage member 21 that is rotatably mounted to the tip side of the wiper arm 30, and a blade rubber 22 that is held by the linkage member 21.

Herein, the blade rubber 22 is formed into an elongated shape by extrusion molding of natural rubber or the like, and is held to the linkage member 21 via a pair of plate springs (not shown) also called vertebrae. In addition, covers 23 covering a back surface side of the pair of plate springs and the blade rubber 22 are respectively provided on both sides in a long-side direction of the linkage member 21. Furthermore, end caps 24 are respectively mounted to both sides in the long-side direction of the pair of plate springs and the blade rubber 22. Accordingly, the blade rubber 22 is prevented from falling out of the pair of plate springs.

The blade rubber 22 is pressed against the wiping surface WS by a spring force of a tension spring 70 (refer to FIG. 4) provided on an inner side the wiper arm 30. The wiper blade 20 performs a reciprocating wiping action over a predetermined wiping range (not shown) on the wiping surface WS by a swing motion of the wiper arm 30. Accordingly, rainwater, dust, etc. adhering to the wiping surface WS are wiped off.

Herein, as shown in FIG. 1 to FIG. 4, the wiper arm 30 includes an arm shank 40, an arm head 50, a cover member 60, and a tension spring 70.

### [Arm shank]

As shown in FIG. 4 to FIG. 6, the arm shank 40 is formed by injection molding of a resin material such as plastic into a substantially rod shape which is tapered. A cross-section of the arm shank 40 along a direction orthogonal to a long-side direction thereof is formed into a substantially U-shape, and the arm shank 40 includes a pair of sidewall parts 41. The sidewall parts 41 are disposed opposed to each other in a wiping direction (up-down direction in FIG. 1 and FIG. 3) of the wiper blade 20, i.e., a short-side direction of the arm shank 40.

In addition, the arm shank 40 includes one top wall part 42. Specifically, the top wall part 42 is provided on a side opposite to the wiping surface WS side of the pair of sidewall parts 41, and connects the pair of sidewall parts 41 to each other. In other words, the pair of sidewall parts 41 are respectively integrally provided on both sides in the short-side direction of the top wall part 42, and accordingly, a cross-section along a direction orthogonal to the long-side direction of the arm shank 40 forms a substantially U-shape.

A linkage shaft 43 rotatably mounted to the arm head 50 is integrally provided on an inner side of the arm shank 40 surrounded by the pair of sidewall parts 41 and the one top wall part 42, on a base end side (right side in FIG. 5 and FIG. 6) of the arm shank 40. In other words, the base end side of the arm shank 40 is rotatably mounted to the arm head 50. Specifically, the linkage shaft 43 extends in the short-side direction of the arm shank 40, and both axial sides of the linkage shaft 43 are respectively connected to the pair of sidewall parts 41. In addition, the linkage shaft 43 is disposed at a portion of a notch part 44 provided on the base end side of the top wall part 42.

Furthermore, as shown in FIG. 4, the linkage shaft 43 forms a shape in which a part of an outer circumferential part of a cylinder is cut out, such that a cross-section in the long-side direction of the arm shank 40 forms a substantially D-shape. In other words, the linkage shaft 43 has a planar part 43a and is formed into a so-called D-cut shape. Accordingly, the linkage shaft 43 is capable of being easily mounted to a linkage recess 58 of the arm head 50.

In addition, a mounting shaft 45 to which the linkage member 21 of the wiper blade 20 is rotatably mounted is integrally provided on the inner side of the arm shank 40, on the tip side (left side in FIG. 5 and FIG. 6) of the arm shank 40. In other words, the wiper blade 20 is rotatably mounted on the tip side of the arm shank 40. Specifically, similar to the linkage shaft 43, the mounting shaft 45 extends in the short-side direction of the arm shank 40, and both axial sides of the mounting shaft 45 are respectively connected to the pair of sidewall parts 41.

The mounting shaft 45 is formed into a substantially cylindrical shape, and as indicated by a broken line arrow M in FIG. 5, a linkage part 21a provided at the linkage member 21 is capable of being mounted to the mounting shaft 45 in a one-touch manner by a so-called snap fit. In other words, the wiper blade 20 is capable of being easily attached to and detached from the arm shank 40 and is excellent in maintainability.

Furthermore, a shank-side engagement part 46 with which a tip side (left side in FIG. 4) of the tension spring 70 is engaged is integrally provided on the inner side of the arm shank 40, between the linkage shaft 43 and the mounting shaft 45 in the long-side direction of the arm shank 40. Specifically, the shank-side engagement part 46 is provided between the pair of sidewall parts 41 and is integrally provided across three spots, i.e., the sidewall parts 41 and the one top wall part 42. Accordingly, sufficient strength of the shank-side engagement part 46 is ensured.

The shank-side engagement part 46 corresponds to a second engagement part in the disclosure.

The shank-side engagement part 46 is disposed at a portion close to the top wall part 42 in a height direction (up-down direction in FIG. 4) of the arm shank 40. In other words, the shank-side engagement part 46 is disposed at a deep portion on the inner side of the arm shank 40. Accordingly, the tip side of the tension spring 70 is also disposed at a portion close to the top wall part 42.

A base end side (right side in FIG. 4) of the tension spring 70 is engaged with a head-side engagement part 57 (refer to FIG. 4 and FIG. 8) of the arm head 50. Herein, the head-side engagement part 57 is disposed at a portion closer to the wiping surface WS than the shank-side engagement part 46 in the height direction (up-down direction in FIG. 4) of the arm shank 40. Accordingly, as shown in FIG. 4, the tension spring 70 is engageable with each of the shank-side engagement part 46 and the head-side engagement part 57 while avoiding the linkage shaft 43 and the linkage recess 58.

In addition, as shown in FIG. 4 to FIG. 6, a spring accommodating recess 47 is provided on the inner side of the arm shank 40, on the base end side (arm head 50 side) of the top wall part 42.

The spring accommodating recess 47 extends in the long-side direction of the arm shank 40, and a length dimension of the spring accommodating recess 47 is approximately half a size of a length dimension of the top wall part 42. In addition, the spring accommodating recess 47 is recessed by a predetermined depth from the inner side to an outer side of the arm shank 40. Specifically, a thickness dimension of a portion of the top wall part 42 at which the spring accommodating recess 47 is provided is approximately half a size of a thickness dimension of the portion of the top wall part 42 at which the spring accommodating recess 47 is not provided.

A tip side (left side in FIG. 4 to FIG. 6) of the spring accommodating recess 47 is provided with a taper part 47a that gently slopes from the portion of the top wall part 42 at which the spring accommodating recess 47 is provided toward the portion of the top wall part 42 at which the spring accommodating recess 47 is not provided. Accordingly, stress concentration at the tip side portion of the spring accommodating recess 47 in the top wall part 42 is suppressed.

The shank-side engagement part 46 is disposed in a region of the spring accommodating recess 47 in the long-side direction of the arm shank 40, in the vicinity of the taper part 47a. In other words, the portion of the top wall part 42 at which the shank-side engagement part 46 is provided is in the vicinity of the taper part 47a, so sufficient rigidity is ensured. Thus, the shank-side engagement part 46 is capable of being disposed closer to the top wall part 42. Accordingly, when the arm shank 40 is raised with respect to the arm head 50 (when configuring in the lock-back state), the spring accommodating recess 47 is capable of accommodating a part of a coil part 71 of the tension spring 70 without contact with the top wall part 42 (refer to FIG. 10).

In addition, a reinforcing rib 48 is provided on the inner side of the arm shank 40, between the taper part 47a and the mounting shaft 45 in the long-side direction of the top wall part 42. The reinforcing rib 48 protrudes toward the inner side of the arm shank 40 and is formed into a substantially mesh pattern. Specifically, the reinforcing rib 48 is integrally provided across three spots, i.e., the pair of sidewall parts 41 and the one top wall part 42. Accordingly, rigidity is enhanced at portions of the pair of sidewall parts 41 and the one top wall part 42 at which the reinforcing rib 48 is provided.

In this manner, the reinforcing rib 48 has a function of reinforcing the arm shank 40 and is disposed relatively close to the mounting shaft 45, the taper part 47a, and the shank-side engagement part 46. In other words, the reinforcing rib 48 effectively suppresses deformation of portions of the arm shank 40 that are prone to bearing a load.

Furthermore, as shown in FIG. 5, FIG. 6, and FIG. 11, lock claws 49 are integrally provided respectively on the base end sides (notch part 44 sides) of the pair of sidewall parts 41. The pair of lock claws 49 protrude by a predetermined height respectively toward the inner side of the pair of sidewall parts 41. Specifically, the pair of lock claws 49 are disposed opposed to each other in a direction (left-right direction in FIG. 11) in which the linkage shaft 43 extends. In addition, the lock claw 49 extends in the long-side direction of the sidewall part 41, and a cross-section of the lock claw 49 in a direction orthogonal to the long-side direction of the sidewall part 41 forms a substantially semi-circular shape.

Herein, the pair of lock claws 49 enter lock grooves 59 (refer to FIG. 7 and FIG. 11) provided at the arm head 50, and are respectively engageable with the lock grooves 59. Specifically, when the arm shank 40 is raised with respect to the arm head 50 (when configuring in the lock-back state), the lock claws 49 and the lock grooves 59 are engageable with each other (refer to FIG. 10 and FIG. 11). In this manner, the lock claws 49 and the lock grooves 59 have a function of maintaining the lock-back state of the wiper device 10.

In the case of collapsing the arm shank 40 with respect to the arm head 50 to release the lock-back state of the wiper device 10 (i.e., returning the wiper device 10 to an in-use state), the arm shank 40 may be simply pressed down toward the wiping surface WS with a predetermined force to release engagement between the lock claws 49 and the lock grooves 59.

### [Arm head]

As shown in FIG. 7 and FIG. 8, the arm head 50 is formed into a substantially rectangular parallelepiped shape by injection molding of a resin material such as plastic, and extends in the long-side direction of the wiper arm 30 (refer to FIG. 3). The arm head 50 includes a pair of lateral surface parts 51 oriented toward the wiping direction (up-down direction in FIG. 1 and FIG. 3) of the wiper blade 20.

In addition, a fixed body 52 is provided on the base end side (right side in FIG. 7 and FIG. 8) of the arm head 50. The fixed body 52 is a portion that is fixed to the swing shaft SH (refer to FIG. 4) by the fastening nut NT, and a reinforcing member 53 in an annular shape is inserted (embedded) in the fixed body 52.

The reinforcing member 53 is made of aluminum and has a function of reinforcing the fixed body 52 made of resin. Specifically, the swing shaft SH is inserted through the reinforcing member 53, and a tightening force of the fastening nut NT is applied to the reinforcing member 53. Accordingly, the arm head 50 is capable of being firmly fixed to the swing shaft SH, which is driven to swing, by the fastening nut NT without rattling.

Furthermore, a pair of protrusions 54 are provided on the base end side of the arm head 50. The protrusions 54 are respectively provided at the pair of lateral surface parts 51 forming the arm head 50. Specifically, the protrusions 54 protrude by a predetermined height from the lateral surface parts 51 in the wiping direction of the wiper blade 20. The cover member 60 is capable of being rotatably mounted to the protrusions 54. In other words, the pair of protrusions 54 serve as a rotation center of the cover member 60, and the cover member 60 is capable of being opened and closed with respect to the arm head 50, taking the pair of protrusions 54 as the rotation center.

As shown in FIG. 4, upon configuring the cover member 60 in a state closed with respect to the arm head 50, the cover member 60 conceals the fastening nut NT. Accordingly, the appearance of the wiper device 10 is improved. On the other hand, upon configuring the cover member 60 in a state opened with respect to the arm head 50, the fastening nut NT is exposed to outside. Thus, it becomes possible to tighten or loosen the fastening nut NT using a fastening tool (not shown).

In addition, as shown in FIG. 4, FIG. 7, and FIG. 8, a groove part 55 is provided on the tip side (left side in the figures) of the arm head 50 to extend along the long-side direction of the arm head 50. The groove part 55 is disposed at a short-side direction central part (wiping direction central part of the wiper blade 20) of the arm head 50, and is disposed at a portion of the arm head 50 excluding the fixed body 52.

As shown in FIG. 4, in an assembled state of the wiper device 10, a base end side (right side in FIG. 4) of the tension spring 70 enters the groove part 55. The tension spring 70 is in a non-contact state with respect to the arm head 50. Accordingly, the tension spring 70 is prevented from projecting significantly to the wiping surface WS side compared to the arm head 50. Thus, an overall height of the wiper device 10 is suppressed to be low.

The head-side engagement part 57 formed into a substantially cylindrical shape is integrally provided on the inner side of the groove part 55. Specifically, the head-side engagement part 57 is disposed at a long-side direction central part of the arm head 50, in the vicinity of the fixed body 52. In addition, the head-side engagement part 57 is disposed to cross the inside of the groove part 55 in the short-side direction (wiping direction of the wiper blade 20) of the arm head 50. Accordingly, the base end side of the tension spring 70 is engageable with the head-side engagement part 57.

The head-side engagement part 57 corresponds to a first engagement part of the disclosure.

Furthermore, as shown in FIG. 7, the linkage recess 58 rotatably supporting the linkage shaft 43 of the arm shank 40 is provided on the tip side of the arm head 50. Specifically, the linkage recess 58 is disposed on the arm shank 40 side (left side in the figure) compared to the head-side engagement part 57 in the long-side direction of the arm head 50. In this manner, the base end side (right side in FIG. 4) of the arm shank 40 is rotatably mounted to the arm head 50.

More specifically, an opening 58a, which serves as a mounting side where the linkage shaft 43 is mounted, is provided on a side (upper side in FIG. 4 and FIG. 7) opposite to the wiping surface WS side of the linkage recess 58. In the assembled state of the wiper device 10, the opening 58a is covered by the cover member 60. Accordingly, the linkage shaft 43 is prevented from detaching from the linkage recess 58. In addition, since the opening 58a is covered by the cover member 60, a surface of the wiper device 10 becomes smooth, and thus generation of wind noise is further suppressed.

In addition, as shown in FIG. 7 and FIG. 11, the lock grooves 59 are respectively provided at the pair of lateral surface parts 51 forming the arm head 50. Specifically, when the arm shank 40 is raised with respect to the arm head 50 (when configuring in the lock-back state), the pair of lock claws 49 provided at the arm shank 40 respectively enter and engage with the lock grooves 59.

The lock grooves 59 are disposed between the fixed body 52 and the linkage recess 58 in the long-side direction (left-right direction in FIG. 7) of the lateral surface parts 51. The respective lock grooves 59 are provided to be recessed by a predetermined depth toward the groove part 55 provided at the short-side direction central part of the arm head 50.

Furthermore, lead-in protrusions 59a are provided in arrangement with the lock grooves 59 on a side (upper side in the figure) opposite to the wiping surface WS side of the lock groove 59. In other words, the lock claws 49 provided at the arm shank 40 are engageable with the lock grooves 59 by overcoming the lead-in protrusions 59a.

Herein, as shown in FIG. 11, tapered surfaces TP are formed respectively on a lead-in side (upper side in the figure) and a lock groove 59 side (lower side in the figure) of the lead-in protrusions 59a. Accordingly, by operating the arm shank 40 with a relatively light operating force, the lock claws 49 are capable of easily overcoming the lead-in protrusions 59a.

In the case where the wiper device 10 is in the lock-back state (refer to FIG. 10), a spring force of the tension spring 70 acts in a direction collapsing the arm shank 40. However, with only the spring force of the tension spring 70, the lock claws 49 do not overcome the lead-in protrusions 59a and do not detach from the lock grooves 59. In other words, unless an external force (operating force) is applied in addition to the spring force of the tension spring 70, the lock-back state of the wiper device 10 is maintained and is not released. Thus, a replacement work of the wiper blade 20 and the like can be easily performed, and maintainability is improved.

Herein, the pair of lock claws 49 provided at the arm shank 40 overcome the lead-in protrusions 59a while flexing the pair of sidewall parts 41. However, as shown in FIG. 6 and FIG. 11, the pair of lock claws 49 are disposed in the vicinity of the notch part 44 of the arm shank 40. Thus, the portions of the sidewall parts 41 at which the lock claws 49 are provided are capable of being elastically deformed relatively easily.

### [Tension spring]

As shown in FIG. 4 and FIG. 9, the tension spring 70 causing the wiper blade 20 to elastically contact the wiping surface WS is provided between the arm head 50 and the arm shank 40. Specifically, the tension spring 70 includes a coil part 71 obtained by forming a hard steel wire or the like into a coil. In addition, a first hook part 72 engaged with the head-side engagement part 57 is provided on a base end side (right side in the figure) of the coil part 71, and a second hook part 73 engaged with the shank-side engagement part 46 is provided on a tip side (left side in the figure) of the coil part 71.

The tension spring 70 corresponds to a spring in the disclosure, and the first hook part 72 corresponds to a hook part in the disclosure.

In addition, a straight part 74 extending in an extending direction of the coil part 71 is integrally provided between the coil part 71 and the first hook part 72 in the long-side direction of the tension spring 70. Specifically, the extending direction of the coil part 71 and an extending direction of the straight part 74 are parallel to each other.

In addition, a first bending part B1 and a second bending part B2 are provided between the straight part 74 and the coil part 71, and an inclined part 75 is provided between the first bending part B1 and the second bending part B2. The inclined part 75, and the first bending part B1 and the second bending part B2 disposed at both ends thereof, have a function of configuring an axis C1 of the coil part 71 and an axis C2 of the straight part 74 to be shifted from and parallel to each other.

By providing multiple bending parts (first bending part B1 and second bending part B2) and the inclined part 75 in this manner, as shown in FIG. 4 and FIG. 10, the first hook part 72 and the second hook part 73 of the tension spring 70 are engageable respectively with the head-side engagement part 57 and the shank-side engagement part 46 while avoiding the linkage shaft 43 and the linkage recess 58.

In addition, as shown in FIG. 4, when the arm shank 40 is collapsed with respect to the arm head 50 (when configuring the wiper device 10 in an in-use mode), the straight part 74 of the tension spring 70 becomes parallel to the extending direction of the pair of sidewall parts 41. Specifically, when the arm shank 40 is collapsed with respect to the arm head 50, the straight part 74 is disposed to extend along sidewall end faces EF (refer to FIG. 6) provided at the pair of sidewall parts 41.

Herein, the sidewall end faces EF provided respectively at the pair of sidewall parts 41 are provided on the wiping surface WS side of the pair of sidewall parts 41, and are capable of being opposed to the wiping surface WS. Specifically, when the arm shank 40 is collapsed with respect to the arm head 50, the pair of sidewall end faces EF are opposed to the wiping surface WS (refer to FIG. 4).

In contrast, as shown in FIG. 10, when the arm shank 40 is raised with respect to the arm head 50 (when configuring in the lock-back state), a part (a side opposite to the wiping surface WS side) of the coil part 71 forming the tension spring 70 is accommodated in the spring accommodating recess 47 of the arm shank 40, and when the arm shank 40 is raised with respect to the arm head 50 and the arm shank 40 is viewed from a direction in which the pair of sidewall parts 41 are opposed to each other, an entirety of the tension spring 70 is hidden by the pair of sidewall parts 41.

### [Regarding lock-back action]

As shown in FIG. 10 and FIG. 11, upon raising the arm shank 40 with respect to the arm head 50, the pair of lock claws 49 provided at the arm shank 40 respectively enter the pair of lock grooves 59 provided at the arm head 50. Accordingly, the tension spring 70 approaches the top wall part 42 (spring accommodating recess 47), and the lock-back state of the wiper device 10 is maintained.

A lock-back angle of the wiper device 10, i.e., an angle on a narrow-angle side of the arm shank 40 with respect to the wiping surface WS (refer to FIG. 2 and FIG. 4), is about 20 degrees. Herein, the lock-back angle is configured to be small at about 20 degrees, which is to prevent the arm shank 40 from contacting a rear spoiler (not shown) provided on a vehicle side (i.e., to prevent scratching) in the case where the wiper device 10 is hidden by the rear spoiler. Since the wiper blade 20 can be easily detached from the arm shank 40 (snap-fit structure), even though the lock-back angle is about 20 degrees, maintainability of the wiper device 10 does not decrease.

In the case where the wiper device 10 is in the lock-back state, the tension spring 70 assumes a posture shown in FIG. 10. Specifically, a part (upper side portion in the figure) of the coil part 71 of the tension spring 70 is accommodated in the spring accommodating recess 47 of the arm shank 40. In other words, a part of the coil part 71 enters a portion (spring accommodating recess 47) that is thinned compared to other portions of the top wall part 42. At this time, the coil part 71 is in a non-contact state with respect to the top wall part 42. Thus, scratching is prevented on both the top wall part 42 and the coil part 71.

Furthermore, with the wiper device 10 in the lock-back state, upon viewing the arm shank 40 from the direction in which the pair of sidewall parts 41 are opposed to each other, as shown in FIG. 10, the entirety of the tension spring 70 is completely hidden by the pair of sidewall parts 41.

In contrast, to configure the arm shank 40 into a state collapsed with respect to the arm head 50, i.e., to configure the wiper device 10 into the in-use state, an operating force may be simply applied to the arm shank 40 to collapse the arm shank 40 with respect to the arm head 50. Accordingly, the lock claws 49 overcome the lead-in protrusions 59a and detach from the lock grooves 59. Thus, the tension spring 70 moves away from the top wall part 42 (spring accommodating recess 47) and turns into the state shown in FIG. 4 (in-use state of the wiper device 10).

Herein, as shown in FIG. 4, upon viewing the arm shank 40 from the direction in which the pair of sidewall parts 41 are opposed to each other, the entirety of the tension spring 70 is substantially hidden by the sidewall parts 41. Specifically, at least a part of the straight part 74 of the tension spring 70 is disposed on the inner side of the arm shank 40 compared to the sidewall end faces EF of the pair of sidewall parts 41. Thus, an axial base end side (right side in FIG. 4) of the coil part 71 does not significantly protrude toward the wiping surface WS.

In this manner, in the lock-back state of the wiper device 10, a part of the coil part 71 escapes (is accommodated) to the inner side of the spring accommodating recess 47, and in the in-use state of the wiper device 10, the axial base end side of the coil part 71 does not significantly protrude toward the wiping surface WS. This is achieved by providing the tension spring 70 with the first bending part B1 and the second bending part B2 and with the straight part 74 and the inclined part 75. Thus, the height of the wiper device 10 from the wiping surface WS can be reduced compared to the conventional art, and thus wind noise that may occur during high-speed traveling and the like can be effectively reduced.

Depending on the vehicle model on which the wiper device 10 is installed, there may be cases where a curvature of the wiping surface WS is large. In such cases, as indicated by a broken line arrow R in FIG. 4, the wiper blade 20 swings significantly around the mounting shaft 45 with respect to the arm shank 40. In the wiper device 10 of the present embodiment, the base end side (right side in FIG. 4) of the wiper blade 20 is capable of entering the inner side of the arm shank 40, which is surrounded by the pair of sidewall parts 41 and the one top wall part 42. As shown in an enlarged portion enclosed by a broken line in FIG. 4, the base end side of the wiper blade 20 enters the inner side of the arm shank 40. In this manner, the wiper device 10 is also compatible with a wiping surface WS with a large curvature.

As described in detail above, according to the wiper device 10 of the present embodiment, the arm head 50 includes the head-side engagement part 57 with which the base end side of the tension spring 70 is engaged. The arm shank 40 includes: the pair of sidewall parts 41 disposed opposed to each other in the wiping direction of the wiper blade 20; the top wall part 42 provided on a side opposite to the wiping surface WS side of the pair of sidewall parts 41 and connecting the pair of sidewall parts 41 to each other; the shank-side engagement part 46 which is provided between the pair of sidewall parts 41 and with which the tip side of the tension spring 70 is engaged; and the spring accommodating recess 47 provided at the top wall part 42 and capable of accommodating a part of the coil part 71 of the tension spring 70. When the arm shank 40 is raised with respect to the arm head 50, a part of the coil part 71 of the tension spring 70 is accommodated in the spring accommodating recess 47, and when the arm shank 40 is raised with respect to the arm head 50 and the arm shank 40 is viewed from the direction in which the pair of sidewall parts 41 are opposed to each other, the tension spring 70 is hidden by the pair of sidewall parts 41.

Accordingly, the tension spring 70 does not protrude significantly toward the wiping surface WS, the height of the wiper device 10 from the wiping surface WS can be further reduced, and thus it becomes possible to further suppress wind noise generated by the wiper device 10 during high-speed traveling and the like of the vehicle. Thus, in the case of being applied to vehicles powered by electric motors with low noise, such as electric vehicles, it becomes possible to reduce the wind noise transmitted to the vehicle interior, and it becomes possible to improve comfort in the vehicle cabin.

In addition, according to the wiper device 10 of the present embodiment, the sidewall end faces EF capable of being opposed to the wiping surface WS are respectively provided on the wiping surface WS side of the pair of sidewall parts 41. The tension spring 70 includes: the coil part 71 formed into a coil shape; the first hook part 72 provided on the base end side of the coil part 71 and engaged with the head-side engagement part 57; and the straight part 74 provided between the coil part 71 and the first hook part 72 and extending in the extending direction of the coil part 71. When the arm shank 40 is collapsed with respect to the arm head 50, at least a part of the straight part 74 is disposed on the inner side of the arm shank 40 compared to the sidewall end faces EF.

Accordingly, the tension spring 70 does not need to project significantly from the arm shank 40 toward the wiping surface WS, and accordingly, the overall height of the wiper device 10 can also be further suppressed to be low.

Furthermore, according to the wiper device 10 of the present embodiment, the base end side of the wiper blade 20 is capable of entering the inner side of the arm shank 40 surrounded by the pair of sidewall parts 41 and the top wall part 42.

Accordingly, the wiper device 10 is easily compatible with a wiping surface WS with a large curvature.

In addition, according to the wiper device 10 of the present embodiment, the height from the wiping surface WS can be reduced to reduce the load on the wiper device 10 applied by traveling wind, and durability of the wiper device 10 can be improved to reduce manufacturing energy of the wiper device 10. Thus, it is possible to achieve, in particular, Goal 7 (ensure access to affordable, reliable, sustainable and modern energy for all) and Goal 13 (take urgent action to combat climate change and its impacts) of the Sustainable Development Goals (SDGs) established by the United Nations.

The disclosure is not limited to the above embodiment, and obviously various modifications may be made within a scope without deviating from the spirit thereof. For example, in the above embodiment, the wiper device 10 has been described taking an example of wiping a windshield (rear glass) provided at the back door of a vehicle such as an automobile. However, the disclosure is not limited thereto, and may be applied to wiper devices that wipe, for example, a front glass of a vehicle such as an automobile, or a glass of aircraft, railway vehicles, construction machinery, etc.

Furthermore, the material, shape, dimensions, quantity, arrangement spot, etc. of each component in the above embodiment may be configured in any manner as long as the disclosure can be achieved, and are not limited to the above embodiment.

### Reference Signs List

10: wiper device
20: wiper blade
21: linkage member
21 a: linkage part
22: blade rubber
23: cover
24: end cap
30: wiper arm
40: arm shank
41: sidewall part
42: top wall part
43: linkage shaft
43a: planar part
44: notch part
45: mounting shaft
46: shank-side engagement part (second engagement part)
47: spring accommodating recess
47a: taper part
48: reinforcing rib
49: lock claw
50: arm head
51: lateral surface part
52: fixed body
53: reinforcing member
54: protrusion
55: groove part
57: head-side engagement part (first engagement part)
58: linkage recess
58a: opening
59: lock groove
59a: lead-in protrusion
60: cover member
70: tension spring (spring)
71: coil part
72: first hook part (hook part)
73: second hook part
74: straight part
75: inclined part
B 1: first bending part
B2: second bending part
EF: sidewall end face
NT: fastening nut
SH: swing shaft
TP: tapered surface
WS: wiping surface

## Claims

1. A wiper device (10) comprising:
an arm head (50) fixed to a swing shaft (SH);
an arm shank (40) having a base end side rotatably mounted to the arm head (50);
a wiper blade (20) mounted to a tip side of the arm shank (40); and
a spring (70) provided between the arm head (50) and the arm shank (40) and pressing the wiper blade (20) against a wiping surface, wherein
the arm head (50) comprises:
a first engagement part (57) with which a base end side of the spring (70) is engaged,
the arm shank (40) comprises:
a pair of sidewall parts (41) disposed opposed to each other in a wiping direction of the wiper blade (20);
a top wall part (42) provided on a side opposite to a wiping surface side of the pair of sidewall parts (41) and connecting the pair of sidewall parts (41) to each other;
a second engagement part (46) which is provided between the pair of sidewall parts (41) and with which a tip side of the spring (70) is engaged; and
a spring accommodating recess (47) provided at the top wall part (42) and capable of accommodating at least a part of the spring (70), and
with the arm shank (40) raised with respect to the arm head (50), at least a part of the spring (70) is accommodated in the spring accommodating recess (47), and upon viewing the arm shank (40) from a direction in which the pair of sidewall parts (41) are opposed to each other with the arm shank (40) raised with respect to the arm head (50), the spring (70) is hidden by the pair of sidewall parts (41).

2. The wiper device (10) according to claim 1, wherein
sidewall end faces (EF) capable of being opposed to the wiping surface are respective provided on the wiping surface side of the pair of sidewall parts (41),
the spring (70) comprises:
a coil part (71) formed into a coil shape;
a hook part (72) provided on a base end side of the coil part (71) and engaged with the first engagement part (57); and
a straight part (74) provided between the coil part (71) and the hook part (72) and extending in an extending direction of the coil part (71), and
with the arm shank (40) collapsed with respect to the arm head (50), at least a part of the straight part (74) is disposed on an inner side of the arm shank (40) compared to the sidewall end faces (EF).

3. The wiper device (10) according to claim 1 or 2, wherein
a base end side of the wiper blade (20) is capable of entering an inner side of the arm shank (40) surrounded by the pair of sidewall parts (41) and the top wall part (42).
